# FASCICULE DE BREVET EUROPEEN

(11) **EP 1 046 689 B1**
(45) Date de publication et mention de la délivrance du brevet: **25.06.2003**
(21) Numéro de dépôt: 00401095.5
(22) Date de dépôt: 19.04.2000
(51) Int. Cl.: C09D 183/02, C09D 183/04, C03C 17/30

(54) **Composition de revêtement transparent non-mouillable et articles revêtus obtenus**
Zusammensetzung für nichtbenetzbare transparente Beschichtung und damit beschichtete Gegenstände
Composition for a non-wettable transparent coating and coated articles

(30) Priorité: 19.04.1999 FR 9904890
(43) Date de publication de la demande: 25.10.2000
(73) Titulaire: CENTRE NATIONAL D'ETUDES SPATIALES, 75001 Paris (FR)
(72) Inventeur: Guillaumon, Jean-Claude, 31450 Ayguesvives (FR); Nabarra, Pascale Véronique, 31450 Baziege (FR)
(74) Mandataire: Colas, Jean-Pierre

(56) Documents cités:
- EP-A- 0 112 168
- EP-A- 0 811 669
- EP-A- 0 863 191
- WO-A-98/36016
- DE-A- 3 718 451
- PATENT ABSTRACTS OF JAPAN vol. 010, no. 132 (P-456), 16 mai 1986 (1986-05-16) & JP 60 254034 A (FUJITSU KK), 14 décembre 1985 (1985-12-14)
- PATENT ABSTRACTS OF JAPAN vol. 1998, no. 13, 30 novembre 1998 (1998-11-30) & JP 10 212354 A (MITSUBISHI CHEM CORP), 11 août 1998 (1998-08-11)

## Description

La présente invention concerne une composition de revêtement transparent non mouillable et anti-salissure et les articles portant un revêtement durci obtenu à partir de cette composition.

L'invention concerne en particulier les articles en verre minéral ou organique utilisés notamment dans le domaine aéronautique (hublots, cockpit), le domaine automobile (pare-brise, vitres) ou celui du bâtiment (vitrages), revêtus d'un tel revêtement.

Le caractère de mouillabilité est lié à la faculté d'étalement et d'adhérence de films de liquides polaires ou non polaires à la surface de substrats, qui est directement dépendante de l'énergie de surface de ces substrats et à la tension superficielle des liquides.

Par exemple dans le cas de l'eau, de tension superficielle élevée, son étalement à la surface du verre est favorisé par une énergie élevée de cette surface.

La mouillabilité désigne aussi la tendance des substrats à retenir les poussières ou salissures (traces de doigts par exemple). Ces salissures entraînent une diminution de la transparence des verres qui peut être gênante.

Pour diminuer la mouillabilité du verre, il faut donc abaisser son énergie de surface par application d'un revêtement adéquat.

EP-A-863 191 décrit une composition destinée à former un film de peinture résistant à l'encrassement et aux gouttes de pluie, qui est hydrophile (page 10, lignes 30-56), grâce à la présence des groupes SiOH ou SiOR superficiels.

Une telle composition n'est donc pas adaptée pour diminuer la mouillabilité du verre.

Il existe différents types de revêtements non mouillables décrits dans divers brevets.

Cependant, ces revêtements ont tendance à se dégrader dans le temps à cause du vieillissement naturel (humidité, pollution, ultraviolets solaires) mais aussi par une mauvaise résistance à l'abrasion. Ces revêtements dégradés perdent leurs propriétés de transparence, ce qui les rend inutilisables.

La présente invention a pour objet de fournir une composition de revêtement pour articles, notamment en verre, qui, après durcissement, donne un revêtement qui est parfaitement transparent dans le visible (transmission supérieure à 98% entre 300 et 800 nm), non mouillable, d'une grande dureté et qui possède une bonne résistance à l'abrasion, ces propriétés n'étant pas substantiellement altérées au cours du vieillissement.

L'invention concerne une composition de revêtement transparent, non mouillable, comprenant (a) un polydialkoxysiloxane, (b) un polysiloxane à groupements terminaux réactifs, (c) un agent réticulant, et, facultativement, (d) de la silice colloïdale et (e) un catalyseur de durcissement

Les polydialkoxysiloxanes (a) utiles dans l'invention ont pour formule (Si(OR)₂O)ₙ dans laquelle :

R = un radical méthyle ou éthyle, et n est supérieur à 3.

Si désiré, ces polydialkoxysiloxanes peuvent être associés à des composés dialkoxymétalliques, par exemple du diéthoxytitanoxane.

Le polydiéthoxysiloxane est le constituant (a) préféré en raison de sa meilleure réactivité.

Des polysiloxanes à groupements terminaux réactifs (b) utiles dans l'invention ont pour formule générale : 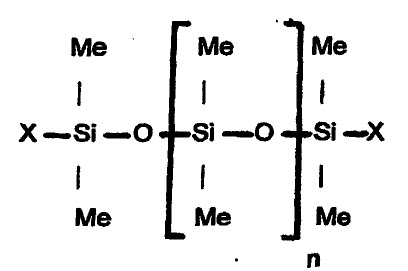 dans laquelle n est supérieur à 1 et X est un groupement réactif, par exemple -H, -CH = CH₂,- OH, -Cl, -Br, -O-Me, -O-Et, -O-Ac, -N =Me₂, - N=Et₂, -N=Pr₂, -O-N=CR₂.

L'agent réticulant (c) utile dans l'invention peut être tout composé organique de silicium comportant au moins deux groupes réactifs. On peut citer, par exemple, les composés suivants : diméthyldiacétoxysilane, vinylméthyldiacétoxysilane, éthyltriacétoxysilane, méthyltriacétoxysilane, vinyltriacétoxysilane, tétraacétate de silicium, diméthyldiéthoxysilane, 1,1,3,3-tétraméthyl-1,3-diéthoxysilane, méthyltriéthoxysilane, méthyltriméthoxysilane, diméthyltétraméthoxydisiloxane, tétraéthoxysilane, tétraméthoxysilane, tétrapropoxysilane, bis(N-méthy(benzylamido)-éthoxyméthylsilane, bis(diméthylamino)diméthylsilane, bis(diméthylamino)méthylvinylsilane.

Les proportions des constituants (a), (b) et (c) peuvent varier largement. A titre indicatif elles peuvent aller de 5 à 60% pour le constituant (a), de 5 à 90% pour le constituant (b) et de 5 à 60% pour le constituant (c), le total de (a), (b) et (c) faisant 100%. Le constituant (d), la silice colloïdale , est optionnel et peut être ajouté en quantité de 0 à 50% en poids par rapport à la somme des constituants (a), (b) et (c).

Afin d'accélérer la polymérisation à température ambiante et/ou à température élevée, on peut, si désiré, utiliser un catalyseur (e), ou des mélanges de catalyseurs, dans une proportion de 0,01 à 5% en poids par rapport à la somme des constituants (a), (b) et (c).

Une liste non limitative de catalyseurs utilisables est la suivante :
- sels organiques d'étain ou composés organo-étain tels que diacétate du dibutyl-étain, dilaurate du dibutyl-étain, octoate d'étain, dioctoate du dibutyl-étain, tétrabutyl-étain, diméthoxydibutyl-étain, etc...
- sels organiques de zinc tels que : octoate de zinc, acétate de zinc, etc...
- composés organiques du titane tels que : tétrabutyl-titane, tétraéthoxytitanate, tétraoctyltitanate, tétraméthoxytitanate, tétra n-propoxytitanate, etc...
- complexes du platine avec un siloxane tel que le divinyltétraméthyldisiloxane, le cyclovinylméthylsiloxane, etc...

La silice colloïdale est facultative et incorporée au mélange en vue d'augmenter la résistance à l'abrasion et à la rayure, si désiré. Cependant il ne faut pas dépasser une quantité de 50% en poids de silice par rapport aux constituants (a) + (b) + (c) car cela conduit à l'apparition de craquelures et à une transparence dégradée.

La silice colloïdale est ajoutée aux autres constituants en suspension dans un solvant (toluène, xylène, alcool, etc...). Le diamètre des particules de silice est, de préférence, non supérieur à 20 nanomètres pour obtenir une transparence optimale.

La composition de l'invention peut être appliquée sur des substrats en verre ou d'autres matériaux, en une épaisseur de quelques micromètres à quelques dizaines de micromètres. Ces revêtements peuvent être appliqués en une ou plusieurs couches successives.

Si désiré ou nécessaire, les revêtements de l'invention peuvent être appliqués sur une couche d'ancrage primaire ou après prétraitement de la surface du substrat.

Egalement, si désiré pour des raisons de facilité d'application ou autres, les compositions de revêtement utilisées dans l'invention peuvent être diluées avant l'application, à un taux de matières sèches de 1 à 80% en poids à l'aide d'un solvant tel que : des hydrocarbures aliphatiques, par exemple hexane, heptane, octane, cyclohexane, etc..., des hydrocarbures aromatiques, par exemple benzène, toluène, xylène, styrène, etc..., des hydrocarbures halogénés, par exemple trichloroéthylène, chlorure de méthyle, chloroforme, etc... ou des mélanges de ces solvants.

L'application du revêtement peut se faire au pistolet à peinture, à la brosse ou par toute technique connue. Le durcissement s'opère habituellement à la température ambiante, mais le recours à un chauffage est possible pour accélérer le durcissement

Les exemples non limitatifs suivants sont donnés en vue d'illustrer l'invention.

### EXEMPLE 1

Le mélange obtenu à partir de polydiéthoxysiloxane contenant 40 à 42% de SiO₂ (viscosité 4 à 5 mPa.s) (Réf. PS 9120 de PETRARCH SYSTEMS INC., U.S.A.) (3 parties en poids), de méthyltriméthoxysilane (Réf. M9100 de PETRARCH SYSTEMS INC., U.S.A.) (5 parties en poids), de polydiméthylsiloxane à terminaison silanol de poids moléculaire compris entre 1500 et 2000 (viscosité 45 à 85 mPa.s) (Réf. PS 340.5 de PETRARCH SYSTEMS, U.SA.) (0,5 partie en poids) et de diacétate de dibutyl-étain (MERCK) (0,1 partie en poids) est appliqué, au pistolet, sur une plaque de verre minéral prétraitée de façon à obtenir un revêtement d'une épaisseur de 5 micromètres, après durcissement à la température ambiante. Le prétraitement appliqué à la plaque de verre de cet exemple et des exemples suivants consistait en un décapage chimique d'environ 1 heure avec une solution alcaline commercialisée sous la dénomination RBS 35 par la Société RBS, Allemagne.

Le taux de transmission optique du revêtement est de 98% entre 300 et 800 nanomètres.

La résistance à la rayure est mesurée par le test à la laine d'acier qui consiste à effectuer, à l'aide d'un carré d'environ 3 cm sur 3 cm de ce matériau, 10 allers et retours en frottant le verre revêtu dans le sens des fibres avec une pression constante lors de cette opération. Le verre est ensuite essuyé avec un chiffon sec, puis rincé à l'alcool, on apprécie ensuite visuellement l'état du revêtement et l'on attribue une notation en fonction de la graduation suivante
0 aucune rayure observée,
1 verre très peu rayé (0 à 5 rayures)
2 verre peu rayé (jusqu'à 20 rayures)
3 verre assez rayé (nombre de rayures inférieur à 50)
4 verre très rayé (nombre de rayures supérieur à 50)
5 verre équivalent ou plus mauvais que le substrat nu

La valeur mesurée pour le revêtement de l'exemple 1 est 2.

La mouillabilité du revêtement peut être mesurée de façon simple par le mode opératoire suivant :

1 goutte d'eau désionisée est répandue à la surface d'une plaque de verre parfaitement nettoyée puis séchée à l'alcool, maintenue en position horizontale.

Dans le cas d'une plaque de verre non traitée, l'eau s'étale et le diamètre du dépôt est de 12 mm, dans le cas d'un support traité, le diamètre de la goutte n'est plus que de 5 mm, ce qui montre bien le caractère de non mouillabilité du revêtement décrit à l'exemple 1.

### EXEMPLE 2

Le mélange obtenu à partir de polydiéthoxysiloxane (5 parties en poids), de méthyltriméthoxysilane (1 partie en poids), de polydiméthylsiloxane à terminaison silanol (5 parties en poids) et de diacétate de dibutyl-étain (0,1 partie en poids) est appliqué, au pistolet, sur une plaque de verre préalablement traitée comme à l'exemple 1, en une épaisseur de 5 micromètres (comme mesuré après durcissement à la température ambiante).

Le taux de transmission optique du revêtement est de 99% entre 300 et 800 nanomètres.

La résistance à la rayure suivant le test décrit à l'exemple 1, est comprise entre 2 et 3.

Une goutte d'eau désionisée répandue à la surface du revêtement ne s'étale pas et son diamètre est de l'ordre de 5 mm.

### EXEMPLE 3

Le mélange obtenu à partir de polydiéthoxysiloxane (5 parties en poids), de méthyltriméthoxysilane (5 parties en poids), de polydiméthylsiloxane à terminaison silanol (5 parties en poids) et de diacétate de dibutyl-étain (0,1 partie en poids) est appliqué, au pistolet, sur une plaque de verre minéral préalablement traitée comme à l'exemple 1, en une épaisseur de 5 micromètres (comme mesuré après durcissement à la température ambiante).

Le taux de transmission optique du revêtement est de 99% entre 300 et 800 nanomètres.

La résistance à la rayure suivant le test décrit à l'exemple 1, est de 2.

Une goutte d'eau désionisée répandue à la surface du revêtement ne s'étale pas et son diamètre est de l'ordre de 5 mm.

### EXEMPLE 4

Le mélange obtenu à partir de polydiéthoxysiloxane (4 parties en poids), de méthyltriméthoxysilane (5 parties en poids), de polydiméthylsiloxane à terminaison silanol (5 parties en poids) et de diacétate de dibutyl-étain (0,1 partie en poids) est appliqué, au pistolet, sur une plaque de verre minéral préalablement traitée comme à l'exemple 1, en une épaisseur de 5 micromètres (comme mesuré après durcissement à la température ambiante).

Le taux de transmission optique du revêtement est de 98% entre 300 et 800 nanomètres.

La résistance à la rayure suivant le test décrit à l'exemple 1, est comprise entre 2 et 3.

Une goutte d'eau désionisée répandue à la surface du revêtement ne s'étale pas et son diamètre est de l'ordre de 5 mm.

### EXEMPLE 5

Le mélange obtenu à partir de polydiéthoxysiloxane (5 parties en poids), de méthyltriméthoxysilane (10 parties en poids), de polydiméthylsiloxane à terminaison silanol (5 parties en poids) et de diacétate de dibutyl-étain (0,1 partie en poids) est appliqué, au pistolet, sur une plaque de verre minéral préalablement traitée comme à l'exemple 1, en une épaisseur de 5 micromètres (comme mesuré après durcissement à la température ambiante).

Le taux de transmission optique du revêtement est de 98% entre 300 et 800 nanomètres.

La résistance à la rayure suivant le test décrit à l'exemple 1, est de 2.

Une goutte d'eau désionisée répandue à la surface du revêtement ne s'étale pas et son diamètre est de l'ordre de 5 mm.

### EXEMPLE 6

Le mélange obtenu à partir de polydiéthoxysiloxane (5 parties en poids), de méthyltriméthoxysilane (10 parties en poids), de polydiméthylsiloxane à terminaison silanol (5 parties en poids), de silice colloïdale (0,2 partie en poids) et de diacétate de dibutyl-étain (0,1 partie en poids) est appliqué, au pistolet, sur une plaque de verre minéral préalablement traitée comme à l'exemple 1, en une épaisseur de 5 micromètres (comme mesuré après durcissement à la température ambiante).

Le taux de transmission optique du revêtement est de 98% entre 300 et 800 nanomètres.

La résistance à la rayure suivant le test décrit à l'exemple 1, est de 2.

Une goutte d'eau désionisée répandue à la surface du revêtement ne s'étale pas et son diamètre est de l'ordre de 5 mm.

### EXEMPLE 7

Le mélange obtenu à partir de polydiéthoxysiloxane (5 parties en poids), de méthyltriméthoxysilane (10 parties en poids), de polydiméthylsiloxane à terminaison silanol (5 parties en poids), de silice colloïdale (0,6 partie en poids) et de diacétate de dibutyl-étain (0,1 partie en poids) est appliqué, au pistolet, sur une plaque de verre minéral préalablement traitée comme à l'exemple 1, en une épaisseur de 5 micromètres (comme mesuré après durcissement à la température ambiante).

Le taux de transmission optique du revêtement est de 98% entre 300 et 800 nanomètres.

La résistance à la rayure suivant le test décrit à l'exemple 1, est comprise entre 1 et 2.

Une goutte d'eau désionisée répandue à la surface du revêtement ne s'étale pas et son diamètre est de l'ordre de 5 mm.

### EXEMPLE 8

Le mélange obtenu à partir de polydiéthoxysiloxane (5 parties en poids), de méthyltriméthoxysilane (10 parties en poids), de polydiméthylsiloxane à terminaison silanol (5 parties en poids), de silice colloïdale (1 partie en poids) et de diacétate de dibutyl-étain (0,1 partie en poids) est appliqué, au pistolet, sur une plaque de verre minéral préalablement traitée comme à l'exemple 1, en une épaisseur de 5 micromètres (comme mesuré après durcissement à la température ambiante).

Le taux de transmission optique du revêtement est de 98% entre 300 et 800 nanomètres.

La résistance à la rayure suivant le test décrit à l'exemple 1, est comprise entre 1 et 2.

Une goutte d'eau désionisée répandue à la surface du revêtement ne s'étale pas et son diamètre est de l'ordre de 5 mm.

### EXEMPLE 9

Le mélange obtenu à partir de polydiéthoxysiloxane (5 parties en poids), de méthyltriméthoxysilane (10 parties en poids), de polydiméthylsiloxane à terminaison silanol (5 parties en poids), de silice colloïdale (5 parties en poids) et de diacétate de dibutyl-étain (0,1 partie en poids) est appliqué, au pistolet, sur une plaque de verre minéral préalablement traitée comme à l'exemple 1, en une épaisseur de 5 micromètres (comme mesuré après durcissement à la température ambiante).

Le taux de transmission optique du revêtement est de 98% entre 300 et 800 nanomètres.

La résistance à la rayure suivant le test décrit à l'exemple 1, est comprise entre 1 et 2.

Une goutte d'eau désionisée répandue à la surface du revêtement ne s'étale pas et son diamètre est de l'ordre de 5 mm.

### EXEMPLE 10

Le mélange obtenu à partir de polydiéthoxysiloxane (5 parties en poids), de méthyltriméthoxysilane (10 parties en poids), de polydiméthylsiloxane à terminaison silanol (5 parties en poids), de silice colloïdale (10 parties en poids) et de diacétate de dibutyl-étain (0,1 partie en poids) est appliqué, au pistolet, sur une plaque de verre minéral préalablement traitée comme à l'exemple 1, en une épaisseur de 5 micromètres (comme mesuré après durcissement à la température ambiante).

Le taux de transmission optique du revêtement est de 98% entre 300 et 800 nanomètres.

La résistance à la rayure suivant le test décrit à l'exemple 1, est de 1.

Une goutte d'eau désionisée répandue à la surface du revêtement ne s'étale pas et son diamètre est de l'ordre de 5 mm.

### EXEMPLE 11

Le mélange obtenu à partir de polydiéthoxysiloxane (5 parties en poids), de tétraméthoxysilane (Réf. T1980 de PETRARCH SYSTEMS INC., U.S.A.) (5 parties en poids), de polydiméthylsiloxane à terminaison diméthylaminopropyle (Réf. PS 510 de PETRARCH SYSTEMS INC., U.S.A.) ayant un poids moléculaire de 2500 et une viscosité de 50 mPa.s (5 parties en poids) et de diacétate de dibutyl-étain (0,02 partie en poids) est appliqué, au pistolet, sur une plaque de verre minéral préalablement traitée comme à l'exempte 1, en une épaisseur de 5 micromètres (comme mesuré après durcissement à la température ambiante).

Le taux de transmission optique du revêtement est de 98% entre 300 et 800 nanomètres.

La résistance à la rayure suivant le test décrit à l'exemple 1, est de 2.

Une goutte d'eau désionisée répandue à la surface du revêtement ne s'étale pas et son diamètre est de l'ordre de 5 mm.

### EXEMPLE 12

Le mélange obtenu à partir de polydiéthoxysiloxane (5 parties en poids), de méthyltriméthoxysilane (5 parties en poids), de polydiméthylsiloxane à terminaison silanol (3 parties en poids), de polydiméthylsiloxane à terminaison diméthylaminopropyle (2 parties en poids) et d'octoate d'étain (MERCK) (0,03 partie en poids) est appliqué, au pistolet, sur une plaque de verre minéral préalablement traitée comme à l'exemple 1, en une épaisseur de 5 micromètres (comme mesuré après durcissement à la température ambiante).

Le taux de transmission optique du revêtement est de 99% entre 300 et 800 nanomètres.

La résistance à la rayure suivant le test décrit à l'exemple 1, est de 2.

Une goutte d'eau désionisée répandue à la surface du revêtement ne s'étale pas et son diamètre est de l'ordre de 5 mm.

### EXEMPLE 13

Le mélange obtenu à partir de polydiéthoxysiloxane (5 parties en poids), de méthyltriméthoxysilane (10 parties en poids), de polydiméthylsiloxane à terminaison diméthylaminopropyle (5 parties en poids), de silice colloïdale (5 parties en poids) et d'octoate d'étain (0,05 partie en poids) est appliqué, au pistolet, sur une plaque de verre minéral préalablement traitée comme à l'exemple 1, en une épaisseur de 5 micromètres (comme mesuré après durcissement à la température ambiante).

Le taux de transmission optique du revêtement est de 98% entre 300 et 800 nanomètres.

La résistance à la rayure suivant le test décrit à l'exemple 1, est de 1.

Une goutte d'eau désionisée répandue à la surface du revêtement ne s'étale pas et son diamètre est de l'ordre de 5 mm.

### EXEMPLE 14

Le mélange obtenu à partir de polydiéthoxysiloxane (5 parties en poids), de tétraéthoxysilane (Réf. T1807 de PETRARCH SYSTEMS INC., U.S.A.) (10 parties en poids), de polydiméthylsiloxane à terminaison silanol (5 parties en poids), de silice colloïdale (5 parties en poids) et d'octoate d'étain (0,05 partie en poids) est appliqué, au pistolet, sur une plaque de verre minéral préalablement traitée comme à l'exemple 1, en une épaisseur de 5 micromètres (comme mesuré après durcissement à la température ambiante).

Le taux de transmission optique du revêtement est de 98% entre 300 et 800 nanomètres.

La résistance à la rayure suivant le test décrit à l'exemple 1, est de 1.

Une goutte d'eau désionisée répandue à la surface du revêtement ne s'étale pas et son diamètre est de l'ordre de 5 mm.

### EXEMPLE 15

Le mélange obtenu à partir de polydiéthoxysiloxane (5 parties en poids), de tétraéthoxysilane (10 parties en poids), de polydiméthylsiloxane à terminaison silanol (3 parties en poids), de polydiméthylsiloxane à terminaison diméthylaminopropyle (2 parties en poids), de silice colloïdale (5 parties en poids) et d'octoate d'étain (0,02 partie en poids) est appliqué, au pistolet, sur une plaque de verre minéral préalablement traitée comme à l'exemple 1, en une épaisseur de 5 micromètres (comme mesuré après durcissement à la température ambiante).

Le taux de transmission optique du revêtement est de 98% entre 300 et 800 nanomètres.

La résistance à la rayure suivant le test décrit à l'exemple 1, est de 1.

Une goutte d'eau désionisée répandue à la surface du revêtement ne s'étale pas et son diamètre est de l'ordre de 5 mm.

Il va de soi que les modes de réalisation ne sont que des exemples et qu'on pourrait les modifier, notamment par substitution d'équivalents techniques, sans sortir pour cela du cadre de l'invention.

## Revendications

1. Composition de revêtement transparent, non mouillable, comprenant (a) un polydialkoxysiloxane, (b) un polysiloxane à groupements terminaux réactifs, (c) un agent réticulant, et, facultativement, (d) de la silice colloïdale et (e) un catalyseur de durcissement.

2. Composition selon la revendication 1, **caractérisée en ce que** le polydialkoxysiloxane (a) a pour formule (Si(OR)₂O)ₙ dans laquelle : R = un radical méthyle ou éthyle, et n est supérieur à 3.

3. Composition selon la revendication 1, **caractérisée en ce que** le polysiloxane à groupements terminaux réactifs (b) a la formule générale : 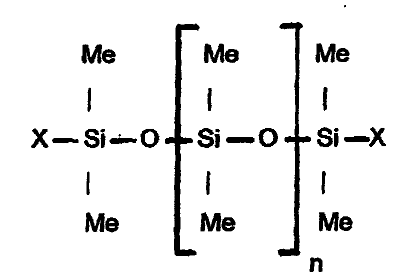 dans laquelle n est supérieur à 1 et X est un groupement réactif choisi parmi -H, -CH = CH₂,- OH, -Cl, -Br, -O-Me, -O-Et, -O-Ac, -N =Me₂, - N=Et₂, -N=Pr₂, -O-N=CR_{2.}

4. Composition selon la revendication 1, **caractérisée en ce que** l'agent réticulant (c) est choisi parmi les composés suivants : diméthyldiacétoxysilane, vinylméthyldiacétoxysilane, éthyltriacétoxysilane, méthyltriacétoxysilane, vinyltriacétoxysilane, tétraacétate de silicium, diméthyldiéthoxysilane, 1,1,3,3-tétraméthyl-1,3-diéthoxysilane, méthyltriéthoxysilane, méthyltriméthoxysilane, diméthyltétraméthoxydisiloxane, tétraéthoxysilane, tétraméthoxysilane, tétrapropoxysilane, bis(N-méthylbenzylamido)-éthoxyméthylsilane, bis(diméthylamino)diméthylsilane, bis(diméthylamino)méthylvinylsilane.

5. Composition selon la revendication 1, **caractérisée en ce que** le catalyseur est choisi parmi les sels organiques d'étain, les composés organo-étain, les sels organiques de zinc, les composés organiques du titane, et les complexes du platine avec un siloxane.

6. Composition selon l'une quelconque des revendications 1 à 5, **caractérisée en ce qu'**elle comprend, en poids, 5-60% de constituant (a), 5-90% de constituant (b) et 5-60% de constituant (c), le total de (a), (b) et (c) faisant 100%.

7. Composition selon la revendication 6, **caractérisée en ce qu'**elle comprend, en outre, jusqu'à 50% en poids de silice colloïdale par rapport au total de (a), (b) et (c).

8. Composition selon la revendication 6 ou 7, **caractérisée en ce qu'**elle comprend en outre, 0,01 à 5% en poids de catalyseur (e) par rapport au total de (a), (b) et (c).

9. Article portant un revêtement non mouillable, transparent, **caractérisé en ce que** ledit revêtement a été obtenu par durcissement d'une couche, appliquée sur ledit article, d'une composition de revêtement telle que définie à l'une quelconque des revendications 1 à 8.

10. Article selon la revendication 9, **caractérisé en ce qu'**il est en verre organique ou minéral.

## Patentansprüche

1. Transparente, nicht benetzbare Beschichtungszusammensetzung, die (a) ein Polydialkoxysiloxan, (b) ein Polysiloxan mit reaktiven Endgruppen, (c) ein Vernetzungsmittel und gegebenenfalls (d) kolloidales Siliciumoxid und (e) einen Härtungskatalysator umfasst.

2. Zusammensetzung gemäß Anspruch 1, **dadurch gekennzeichnet, dass** das Polydialkoxysiloxan (a) die Formel (Si(OR)₂O)ₙ hat, wobei R ein Methyloder Ethylrest ist und n größer als 3 ist.

3. Zusammensetzung gemäß Anspruch 1, **dadurch gekennzeichnet, dass** das Polysiloxan mit reaktiven Endgruppen (b) die allgemeine Formel 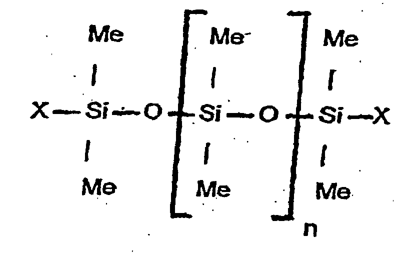 hat, wobei n größer als 1 ist und X eine reaktive Gruppe ist, die aus -H, -CH=CH₂, -OH, -Cl, -Br, -O-Me, -O-Et, -O-Ac, -N=Me₂, -N=Et₂, -N=Pr₂ und -O-N=CR₂ ausgewählt ist.

4. Zusammensetzung gemäß Anspruch 1, **dadurch gekennzeichnet, dass** das Vernetzungsmittel (c) aus den folgenden Verbindungen ausgewählt ist: Dimethyldiacetoxysilan, Vinylmethyldiacetoxysilan, Ethyltriacetoxysilan, Methyltriacetoxysilan, Vinyltriacetoxysilan, Siliciumtetraacetat, Dimethyldiethoxysilan, 1,1,3,3-Tetramethyl-1,3-diethoxysilan, Methyltriethoxysi-Ian, Methyltrimethoxysilan, Dimethyltetramethoxydisiloxan, Tetraethoxysilan, Tetramethoxysilan, Tetrapropoxysilan, Bis(Nmethylbenzylamido)ethoxymethylsilan, Bis(dimethylamino)dimethylsilan, Bis(dimethylamino)methylvinylsilan.

5. Zusammensetzung gemäß Anspruch 1, **dadurch gekennzeichnet, dass** der Katalysator aus: organischen Zinnsalzen, zinnorganischen Verbindungen, organischen Zinksalzen, organischen Titanverbindungen und Komplexen von Platin mit einem Siloxan ausgewählt ist.

6. Zusammensetzung gemäß einem der Ansprüche 1 bis 5, **dadurch gekennzeichnet, dass** sie 5-60 Gew.-% der Komponente (a), 5-90 Gew.-% der Komponente (b) und 5-60 Gew.-% der Komponente (c) umfasst, wobei (a), (b) und (c) insgesamt 100 Gew.-% ausmachen.

7. Zusammensetzung gemäß Anspruch 6, **dadurch gekennzeichnet, dass** sie außerdem bis zu 50 Gew.-% kolloidales Siliciumoxid umfasst, bezogen auf die Gesamtmenge an (a), (b) und (c).

8. Zusammensetzung gemäß Anspruch 6 oder 7, **dadurch gekennzeichnet, dass** sie außerdem 0,01 bis 5 Gew.-% Katalysator (e) umfasst, bezogen auf die Gesamtmenge an (a), (b) und (c).

9. Artikel, der eine nicht benetzbare transparente Beschichtung trägt, **dadurch gekennzeichnet, dass** die Beschichtung durch Härtung einer auf den Artikel aufgetragenen Schicht einer Beschichtungszusammensetzung gemäß einem der Ansprüche 1 bis 8 erhalten wurde.

10. Artikel gemäß Anspruch 9, **dadurch gekennzeichnet, dass** er aus organischem oder mineralischem Glas besteht.

## Claims

1. Nonwettable transparent coating composition comprising (a) a polydialkoxysiloxane, (b) a polysiloxane having reactive terminal groups, (c) a crosslinking agent and, optionally, (d) colloidal silica and (e) a cure catalyst.

2. Composition according to claim 1, **characterized in that** the polydialkoxysiloxane (a) has as formula (Si(OR)₂O)ₙ in which:
R = a methyl or ethyl radical and n is greater than 3.

3. Composition according to claim 1, **characterized in that** the polysiloxane having reactive terminal groups (b) has the general formula: 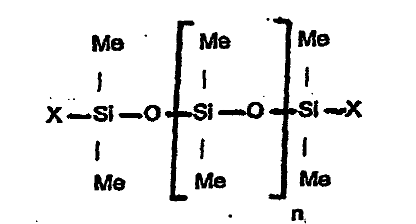 in which n is greater than 1 and X is a reactive group chosen from -H, -CH=CH₂, -OH, -Cl, -Br, -O-Me, -O-Et, -O-Ac, -N=Me₂, -N=Et₂, -N=Pr₂, -O-N=CR₂.

4. Composition according to claim 1, **characterized in that** the crosslinking agent (c) is chosen from the following compounds: dimethyldiacetoxysilane, vinylmethyldiacetoxysilane, ethyltriacetoxysilane, methyltriacetoxysilane, vinyltriacetoxysilane, tetraacetate of silicium, dimethyldiethoxysilane, 1,1,3,3-tetramethyl-1,3-diethoxysilane, methyltriethoxysilane, methyltrimethoxysilane, dimethyltetramethoxydisiloxane, tetraethoxysilane, tetramethoxysilane, tetrapropoxysilane, bis(N-methylbenzylamido)-ethoxymethylsilane, bis(dimethylamino)dimethylsilane, bis(dimethylamino)methylvinylsilane.

5. Composition according to claim 1, **characterized in that** the catalyst is chosen from organic tin salts, oraganotin compounds, organic zinc salts, organotitanium compounds and platinum complexes with a siloxane.

6. Composition according to any one of claims 1 to 5, **characterized in that** it comprises, by weight, 5-60% of constituent (a), 5-90% of constituent (b) and 5-60% of constituent (c), the total of (a), (b) and (c) making 100%.

7. Composition according to claim 6, **characterized in that** it furthermore comprises up to 50% by weight of colloidal silica with respect to the total of (a), (b) and (c).

8. Composition according to claim 6 or 7, **characterized in that** it furthermore comprises 0.01 to 5% by weight as catalyst (e) with respect to the total of (a), (b) and (c).

9. Article bearing a transparent nonwettable coating, **characterized in that** said coating has been obtained by curing a layer, applied to said article, of a coating composition as defined in any one of claims 1 to 8.

10. Article according to claim 9, **characterized in that** it is made of organic or mineral glass.
